# EUROPÄISCHE PATENTSCHRIFT

(11) **EP 1 373 723 B1**
(45) Veröffentlichungstag und Bekanntmachung des Hinweises auf die Patenterteilung: **18.03.2009**
(21) Anmeldenummer: 02718130.4
(22) Anmeldetag: 14.02.2002
(51) Int. Cl.: F03D 7/04, F03D 11/00

(54) **VERFAHREN ZUR ÜBERWACHUNG EINER WINDENERGIEANLAGE**
METHOD FOR MONITORING A WIND ENERGY PLANT
PROCEDE DE SURVEILLANCE D'UNE EOLIENNE

(30) Priorität: 28.03.2001 DE 10115267
(43) Veröffentlichungstag der Anmeldung: 02.01.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/001572
(87) Internationale Veröffentlichungsnummer: WO 2002/079646

(56) Entgegenhaltungen:
- EP-A- 0 317 322
- WO-A-97/38292
- WO-A-99/51305
- DE-A- 4 105 809
- DE-A- 19 948 194
- DE-U- 20 021 970
- NL-A- 9 201 787
- US-A- 4 904 996
- US-A- 5 278 773
- PATENT ABSTRACTS OF JAPAN vol. 2000, no. 07, 29. September 2000 (2000-09-29) & JP 2000 096573 A (DAIHO CONSTR CO LTD), 4. April 2000 (2000-04-04)

## Beschreibung

Die Erfindung betrifft ein Verfahren zur Überwachung von Windenergieanlagen, wobei insbesondere eine akustische Überwachung durchgeführt wird siehe Preprint EU WEC conference Kassel 2000.

Für eine effektive Nutzung von Windenergieanlagen ist es vorteilhaft, die Regelung und die Betriebsführung einer Windenergieanlage derart auszuführen, daß ein vollautomatischer Betrieb der Anlage sichergestellt ist Jede andere Verfahrensweise, die ein manuelles Eingreifen im normalen Betriebsverlauf erfordert, ist aus wirtschaftlichen Überlegungen unakzeptabel. Zur weiteren Steigerung der Wirtschaftlichkeit der Anlage sollte die Regelung derart erfolgen, daß in jedem Betriebszustand ein möglichst hoher Energiewandlungsgrad erzielt wird. Ein weiterer wichtiger Aspekt bei der Regelung und bei der Betriebsführung einer Windenergieanlage ist die Betriebssicherheit. Technische Störungen und umweltbedingte Gefahrenzustände müssen erkannt und die vorhandenen Sicherheitsschaltungen ausgelöst werden. Ferner kann ein Regelungssystem zur Verminderung der mechanischen Belastung der Windenergieanlage beitragen.

Bei der Überwachung von Windenergieanlagen ist es ebenfalls wünschenswert, daß eine Femanalyse durchgeführt werden kann. Dies hat den Vorteil, daß die Erfassung der jeweiligen Betriebsdaten zentral erfolgen kann. Eine derartige Fernüberwachung kann zu einer Erhöhung der Wirtschaftlichkeit der Anlage sowie zu einer Erhöhung der durchschnittlichen Verfügbarkeit der Anlage führen. Dabei werden beispielsweise die Betriebsdaten von einer Service-Zentrale bzw. einer Femüberwachungszentrale abgefragt und analysiert. Durch eine Analyse der eingegangenen Parameter können zum einen auftretende Probleme frühzeitig erkannt werden und zum anderen können die Betriebsdaten wichtige Hinweise auf die Ertrags- und Winddaten für die Entwicklungsabteilung liefern. Eine Analyse dieser Daten durch die Entwicklungsabteilung kann zu Verbesserungen an der Windenergieanlage führen.

Bei einer bekannten Windenergieanlage werden beispielsweise regelmäßig folgende Parameter sensorisch überwacht: Windgeschwindigkeit, Windrichtung, Luftdichte, Drehzahl pro Minute (Mittel- und Extremwerte), Temperaturen, Ströme, Spannungen, Schatlpuls, Blitzeinschläge (Ereigniszähler), etc.

Eine Analyse der eingegangen Parameter durch die Femüberwachungszentrale kann zu einer Verbesserung des Vorort-Services führen, da die Femüberwachungszentrale dem Vorort-Service genaue Hinweise bezüglich der Fehlerquellen geben kann.

Es ist weiterhin bekannt, in die Gondel einer Windenergieanlage eine Videokamera und ein Mikrofon zu integrieren. In DE 29 09 325 wird ferner eine manuell ferngesteuerte, fahrbare Raumüberwachungsanlage mittels Fernsehkamera beschrieben. Dort ist eine auf einem Schwenkarm befindliche Kamera über einen Schlitten innerhalb einer an einer Raumdecke angeordneten U-Schiene hin und her bewegbar. Durch den Schwenkarm ist es erforderlich, dass genügend Raum zum Bewegen der Kameraanordnung in allen möglichen Stellungen des Schwenkarms an der Schiene zur Verfügung steht.

Zur weiteren Verbesserung der Wartung, der Sicherheit und der Wirtschaftlichkeit einer Windenergieanlage ist es wünschenswert, weitere Parameter der Windenergieanlage zu überwachen. Der Erfindung liegt daher das Problem zugrunde, eine Überwachung von Windenergieanlagen zu verbessern.

Die Erfindung löst die Aufgabe mit einem Verfahren mit dem Merkmal nach Anspruch 1. Vorteilhafte Weiterbildungen sind in den Unteransprüchen beschrieben.

Die mit der Erfindung erzielten Vorteile bestehen insbesondere darin, daß eine verbesserte Fehlerfrüherkennung zur Vermeidung von Folgeschäden durchgeführt werden kann. Dies kann beispielsweise zur Erkennung von losen Schraubenverbindungen, von elektrischen Fehlern im Generatorbereich, beim Wechselrichter oder beim Transformator und von Verschleiß oder Eisansatz an den Rotorblättern im Frühstadium führen.

Zur akustischen Überwachung von Windenergieanlagen kann erfindungsgemäß auch ein Referenz-Geräuschspektrum einer Anlage oder Teile davon aufgenommen und gespeichert werden. Das Betriebs-Geräuschspektrum kann während des Betriebes kontinuierlich oder wiederkehrend aufgenommen und mit dem gespeicherten Referenzspektrum verglichen und Abweichungen zwischen diesen beiden Spektren können erfaßt werden. Anstatt ein Referenz-Geräuschspektrum einer Windenergieanlage aufzunehmen, kann auch auf ein bereits gespeichertes Referenzgeräuschspektrum einer Windkraftanlage zurückgegriffen werden.

Gemäß einer vorteilhaften Ausführungsform der Erfindung werden die erfaßten Abweichungen zwischen dem Betriebs- und Referenz-Geräuschspektrum an eine Femüberwachungszentrale übermittelt, um zentral analysiert zu werden.

Vorteilhafterweise können ebenso die ursprünglichen, von einem Schallaufnehmer aufgenommenen Geräusche, die die Abweichung zwischen dem Betriebs- und dem Referenzspektrum hervorgerufen haben, an die Fernüberwachungszentrale übermittelt, damit das Bedienpersonal der Zentrale die Geräusche durch Hören selbst überprüfen kann.

Hierbei ist es besonders vorteilhaft, aus den ursprünglichen Geräuschen ein Geräuschmuster zu bilden und wiederum aus diesen Geräuschmustem eine akustische Datenbank aufzubauen.

Sind die Abweichungen zwischen dem Betriebs- und dem Referenzspektrum größer als ein vorgegebener Schwellwert, so wird die Windenergieanlage gegebenenfalls abgeschaltet.

Nachfolgend wird ein Ausführungsbeispiel der Erfindung beschrieben.

Erfindungsgemäß wird bei einem Probebetrieb einer Windenergieanlage jeweils ein typisches Referenz-Geräuschspektrum bzw. Referenz-Geräuschprofil der Windenergieanlage für bestimmte Betriebsbereiche wie beispielsweise Teillast oder Nennlast aufgezeichnet und in einem Datenspeicher gespeichert. Bei baugleichen Windenergieanlagen ist es ebenfalls möglich, ein bereits gespeichertes ReferenzGeräuschspektrum zu verwenden, anstatt ein spezielles Referenz-Geräuschspektrum der Anlage aufzunehmen. Zur Aufnahme des Geräuschspektrums sind mehrere Aufstellorte von Schallaufnehmern in der Windenergieanlage möglich. Beispielsweise können die Rotorblätter, der Generator bzw. der Antriebsstrang und die Elektronik überwacht werden. Zur Überwachung der Rotorblätter wird ein Schallaufnehmer beispielsweise außen am Turm, zur Überwachung des Generators und des Antriebsstranges wird ein Schallaufnehmer in der Gondel und zur Überwachung der Elektronik wird ein Schallaufnehmer im Turmfuß bzw. in der Trafostation angebracht. Die Aufstellpositionen der Schallaufnehmer sollten zwischen der Aufnahme des Referenz-Geräuschspektrums und des Betriebs-Geräuschspektrums nicht verändert werden.

Beim Betrieb der Windenergieanlage wird der jeweilige Schall (beispielsweise als Frequenzspektrum von 0,1 Hz bis 30 KHz) in Abhängigkeit von dem Betriebspunkt bzw. Arbeitsbereich wie beispielsweise von 0 KW bis zur Nennleistung aufgenommen. Dieser Betriebsschall wird mit dem Referenz-Geräuschspektrum verglichen und ausgewertet.

Bei der Erfassung des Betriebs-Geräuschspektrums wird zuerst der Arbeitsbereich bzw. der Betriebsbereich der Windenergieanlage bestimmt, um das Betriebs-Geräuschspektrum des jeweiligen Bereiches mit dem entsprechenden Referenz-Geräuschspektrum zu vergleichen. Treten dabei Abweichungen auf, die einen vorbestimmten Schwellwert überschreiten, erfolgt eine Fehlermeldung, die zur Femüberwachungszentrale gemeldet wird, und gegebenenfalls ein manuelles (durch die Zentrale) oder automatisches Abschalten der Windenergieanlage.

Bei der Erfassung einer den Schwellwert überschreitenden Abweichung zwischen dem Betriebs- und dem Referenz-Geräuschspektrum wird, wie vorstehend beschrieben, eine Fehlermeldung an eine Femüberwachungszentrale übermittelt. In der Fernüberwachungszentrale kann eine genaue Analyse der Fehlermeldung bzw. der Abweichungen erfolgen. Das Bedienpersonal der Fernüberwachungszentrale kann gegebenenfalls schnell auf eine Fehlermeldung reagieren und diese Fehlermeldung an das Wartungspersonal vor Ort übermitteln. So kann eine Fehlerfrüherkennung rechtzeitig erfolgen und derartige Fehler können durch das Wartungspersonal schnell behoben werden. Des weiteren können dadurch Folgeschäden vermieden werden. Durch eine derartige Verbesserung der Wartung und Instandhaltung der Windenergieanlage kann die durchschnittliche Verfügbarkeit der Anlage und somit die Wirtschaftlichkeit der Anlage erhöht werden.

Zur Verbesserung der Fehlerdiagnose kann das durch einen Schallaufnehmer aufgenommene ursprüngliche Geräusch, das die Abweichung zwischen dem Betriebs- und dem Referenzspektrum verursacht hat, an die Femüberwachungszentrale übermittelt werden. Dort kann sich das Bedienpersonal die in Frage kommenden Geräusche differenzierter anhören und gegebenenfalls Maßnahmen ergreifen. Eine derartige Vorgehensweise ist wünschenswert, da das menschliche Ohr empfindlicher und selektiver auf bestimmte Geräusche reagiert als eine Signalverarbeitungseinrichtung.

Zur Entlastung des Bedienpersonals der Femüberwachungszentrale können aus den ursprünglichen Geräuschen (Audiosignalen) Geräuschmuster gebildet sowie aus diesen Mustern eine akustische Datenbank aufgebaut werden. Eine Signalverarbeitungseinrichtung vergleicht die aufgenommenen Geräusche einer Windenergieanlage mit den gespeicherten Geräuschmustem und trifft bereits eine Vorauswahl der möglichen Fehlerursachen. Beispielsweise können die aufgenommenen Audiosignale digitalisiert und in Geräuschmuster umgewandelt und dann digital weiterverarbeitet werden. Das Bedienpersonal der Fernüberwachungszentrale kann sich somit das Geräusch anhören und hat dabei bereits mögliche, von der Signalverarbeitungseinrichtung vorgeschlagene Fehlerursachen zur Hand. Diese Vorgehensweise kann zu einer Verbesserung und Entlastung des Arbeitsplatzes für das Bedienpersonal der Fernüberwachungszentrale führen und die Überwachung effizienter gestalten.

Außerdem ist es möglich, durch Aufbau einer Datenbank, in der alle Abweichungen zwischen dem Betriebs- und dem Referenz-Geräuschspektrum zeitlich gespeichert sind, Erkenntnisse über die Ursache und den zeitlichen Verlauf eines Fehlers zu gewinnen. Außerdem können die Daten dieser Datenbank mit Daten der anderen Betriebsparameter wie beispielsweise Windgeschwindigkeit, Temperatur, Strom, Spannung, etc. verglichen werden. Aus dem Vergleich dieser Daten kann möglicherweise eine Korrelation bei der Fehlerentwicklung gefunden werden. Derartige Hinweise wären für die Entwicklungsabteilung sehr wertvoll, da diese Erkenntnisse bei der Entwicklung neuer Anlagen und bei der Weiterentwicklung bestehender Anlagen eingebracht werden können.

Es kann eine-Kamera (optischer Aufnehmer) in der Gondel vorgesehen sein. Diese Kamera benötigt eine Aufhängung. Diese Aufhängung kann z. B. ein Teleskoparm sein, der in geeigneter Weise verfahrbarlschwenkbar ist. Natürlich kann auch die Kamera an diesem Teleskoparm wiederum verschwenkbar angebracht sein, so dass sich mehrere Freiheitsgrade ergeben.

Alternativ kann die Kamera an einer in Längsrichtung der Gondel verlaufenden Schiene verfahrbar angebracht sein. Auch hier kann die Kamera selbst natürlich wieder schwenkbar angelenkt sein.

Eine besonders vorteilhafte Lösung ist eine Anordnung der Kamera an einer kreisrund oder elliptisch geformten Schiene. Oder die Führungsschiene für die Kamera verläuft so, dass nicht nur Vorderansichten der in der Gondel vorhandenen Einrichtungen, z. B. Generatoren, mit der Kamera aufgezeichnet werden können, sondern die Kamera ist über eine entsprechend ausgebildete Führungsschiene z. B. über einen Schaltschrank verfahrbar und erlaubt sogar einen Blick in diesen Schrank (z. B. bei transporentenen Schrankwänden).

Natürlich ist solch ein System unter Umständen aufwändig. Im Gegensatz dazu kann eine einfache und wenig aufwändige Befestigung der Kamera an einer zentralen Stelle in der Gondel mit einer fest vorgegebenen Ausrichtung erfolgen. Oder die Kamera wird an dieser Stelle ortsfest, jedoch um eine (z. B. vertikale) Achse schwenkbar angebracht. Bei einem ausreichenden Öffnungswinkel des Objektivs erlaubt die Kamera durchaus einen Rundblick durch die Gondel - mit Ausnahme eines außerhalb des Öffnungswinkels liegenden Bereiches am Boden bzw. an der Decke der Gondel. Diese Einschränkung ließe sich bei einer ortsfesten Kamera durch einen zweiten Freiheitsgrad (schwenkbar um eine horizontale Achse) wenigstens teilweise beheben.

In einer weiteren Variante der Erfindung können für die Kamera Wechselobjekte bzw. Wechseloptiken vorgesehen sein. So können je nach Anwendungsfall Teleobjekte bei ortsfester Montage eingesetzt werden, um (relativ) weit entfernte Einzelheiten erfassen zu können. Ein Weitwinkelobjektiv erlaubt, einen Überblick über die Gondel zu gewinnen. Weiterhin kann z.B. eine Infrarot-Optik eingesetzt werden, um thermische Situationen zu erfassen.

Diese Optiken bzw. Objektive können in einer einfachen Ausführungsform von Wartungspersonal vor Ort ausgewechselt werden, wenn z. B. eine Servicezentrale bestimmte optische/thermische Informationen gewinnen möchte. In einer besonders komfortablen Ausführungsform kann dieser Wechsel ferngesteuert von einer Zentrale aus erfolgen.

Entsprechend den örtlichen bzw. anlagentechnischen Gegebenheiten können natürlich auch mehrere Kameras vorgesehen sein. So kann z. B. eine Kamera in der Gondel vorgesehen sein. Diese Kamera kann demnach den ihr zugewandten Teil des Ringgenerators erfassen, jedoch natürlich nicht den abgewandten (rotor nabenseitigen) Teil des Generators sowie Einzelheiten in der Rotornabe selbst, der Blattbefestigung, etc. Hierzu kann eine weitere Kamera im Bereich der Rotornabe vorgesehen sein.

Noch eine weitere Kamera kann im Bereich des Turmfußes bzw. im Bereich des Transformators vorgesehen sein, um auch dort einen visuellen Eindruck gewinnen zu können. Diese Möglichkeit einer Visualisierung kann soweit gehen, bestimmte optische Anzeigen, die vielleicht für Wartungspersonal vorgesehen sind, oder in der Anlage angezeigte Zählerstände unabhängig von einer Fernüberwachung der Anlage zu erfassen.

Natürlich ist zur Erfassung eines Bildes Licht erforderlich, sofern eben ein Bild im Bereich des sichtbaren Lichtes aufgenommen werden soll. Dieses Licht kann einerseits von Lichtquellen kommen, die zur Ausleuchtung der Anlage z. B. bei Wartungsarbeiten ohnehin vorgesehen sind. Andererseits kann dieses Licht auch oder zusätzlich von separate(n) Lichtquelle(n) kommen, welche die Ausleuchtung verbessern sollen. Zur Ausleuchtung des Gondelinneren kann aber auch vorgesehen sein, einen Teil der Gondel mit einem transparenten Gehäuse zu versehen, so dass natürliches Licht in die Gondel einfallen kann und somit die Gondel tagsüber ausleuchtet.

Diese Lichtquelle(n) können getrennt von der Kamera angeordnet und simultan mit der Kamera ein- und ausgeschaltet und verfahren werden. Alternativ können diese Lichtquelle(n) auch mechanisch mit der Kamera verbunden sein und durch die Ausrichtung in Blickrichtung der Kamera stets den Bereich vor der Kamera ausleuchten.

Wiederum alternativ können Lichtquelle(n) und/oder Kamera(s) jeweils einzeln oder auch gemeinsam fembedient oder durch eine Automatik gesteuert werden. Tritt beispielsweise ein Schallereignis auf, das eindeutig zu identifizieren ist und auf ein bestimmtes Ereignis hinweist, so können nach der Erfassung dieses Schallereignisses Kamera(s) und/oder Lichtquelle(n) eingeschaltet und in vorbestimmte Positionen gebracht werden. Auf diese Weise kann ein Suchen der Schallquelle/- Störung entfallen und die Kamera(s) und Lichtquelle(n) sind schnellstmöglich darauf ausgerichtet.

Die Ausrichtung kann einerseits auf Grund festgelegter Koordinatenangaben erfolgen, die entweder als Absolutwerte oder als Relativwerte zu der aktuellen Kameraposition erzeugt werden. Andererseits kann die Ausrichtung auch derart erfolgen, dass bei erkannter Position der Störung diese z. B. durch eine Lichtquelle markiert wird und die Kamera sich selbsttätig darauf ausrichtet und bei Bedarf zusätzliche Lichtquelle(n) aktiviert werden.

So kann z. B. analog zu einer Anzeige von Störungen elektronischer Baugruppen in komplexen Geräten, die durch eine aktive LED auf der Baugruppe erfolgen kann, eine Lichtquelle an der gestörten Komponente der Anlage eingeschaltet werden. Die Kamera kann sich dann auf Grund unterschiedlicher Helligkeitswerte, gerade bei im Übrigen noch dunkler Anlage, auf diese Position ausrichten.

Eine weitere Möglichkeit der Kamera- bzw. Scheinwerferausrichtung ergibt sich mittels Richtmikrofon(en), die entweder an Referenzpositionen angeordnet und in vorgegebenen Richtungen ausgerichtet sind, oder die mit der Kamera gekoppelt sind und so lange eine Schwenkbewegung der Kamera herbeiführen, bis der erfasste Schall einen Maximalwert erreicht. Bei hinreichend kleinem Öffnungswinkel des Richtmikrofons ist die Kamera dann auf die Schallquelle ausgerichtet.

Bei Richtmikrofonen an Referenzpositionen müssen die unterschiedlichen Signale der einzelnen Mikrofone erfasst und ausgewertet werden. Daraus kann dann wie bei einer Peilung die Richtung der Schallquelle ermittelt werden.

Demnach kann also das erfasste Schallereignis eine Steuerungsautomatik auslösen, die Kamera(s) und Lichtquelle(n) automatisch in die (hoffentlich) richtige Position steuert. Natürlich kann auch eine automatische Bild/Ton-Aufzeichnung und/oder Übertragung, z.B.zu einer Überwachungszentrale, durchgeführt werden.

Das erfasste Schallereignis kann aber auch nur zur Signalisierung in der Überwachungszentrale verwendet werden, um das Auftreten einer Störung anzuzeigen: Die Steuerung der Kamera erfolgt dann von der Überwachungszentrale aus, und alle vorstehend durch eine Automatik ausgeführten Steuerungsvorgänge können natürlich auch durch eine manuelle Fernsteuerung aus der Zentrale vorgenommen werden.

Zur Orientierung bei einer manuellen Steuerung können wiederum akustische Daten (von einem Richtmikrofon), optische Daten (von einer Kamera) oder Kombinationen davon oder andere Daten verwendet werden. Demnach kann bei einem eindeutigen Schallereignis dieses auch zur Überwachungszentrale übertragen und dort ausgewertet werden.

Erfolgt die Auswertung z. B. auf der Basis eines vorhandenen Referenzdaten-Bestandes, kann dem Bediener sodann die erforderliche Kamera- bzw. Lichtquelle(n)-Ausrichtung angegeben werden. Der Bediener kann dann Kamera(s) und Lichtquelle(n) an Hand dieser Vorgaben steuern. Natürlich kann der Bediener Kamera(s) und Lichtquelle(n) auch online an Hand von (in Echtzeit) übertragenen visuellen bzw. akustischen Daten steuern.

Auch der Gedanke der Bereitstellung der Bilder im Internet, z. B. für den Betreiber der Anlage, ist eine Variante der Erfindung. Hier könnte die Priorisierung der zu übertragenden Daten eine Rolle spielen, indem z. B. Betriebsdaten und/oder Fernwirkdaten stets einen Vorrang vor derartigen Bild- und/oder Schalldaten haben.

Eine Anordnung der Überwachungseinrichtung im Bereich der Gondel kann durch wechselnde Windrichtungen zu zufälligen Kamerablickrichtungen führen, wobei die Hauptwindrichtung natürlich wiederum eine Vorzugsrichtung bildet. Die Kamera kann aber einerseits auch in einer von dieser Hauptwindrichtung abweichenden Richtung angebracht sein, und damit bei sich verändernder Azimutposition der Gondel entsprechend die Blickrichtung ändern.

Andererseits kann die Kamera jedoch auch (mit der Gondel) verschwenkbar ausgeführt werden, so dass ein Betrachter die Blickrichtung verändern kann. Eine solche Kamera, z. B. in einem Windpark auf einer der Anlagen installiert, gestattet einerseits einen Schwenk über den gesamten Windpark und andererseits bei schönem Wetter und klarer Sicht über die Landschaft.

Kombiniert man nun eine solche Kamera noch mit einem Sichtweitenmessgerät, kann z.B. die Kameraposition in einer Karte eingeblendet werden. Zusätzlich kann in der Karte die aktuelle Blickrichtung der Kamera sowie die Sichtweite angegeben werden und in einem Fenster kann das aktuelle Kamerabild dargestellt werden.

Hieraus ergeben sich sehr attraktive Internet-Angebote, die neben einem rein optischen Reiz durchaus auch Lemeffekte vermitteln können. So bietet die Erfindung auch die Möglichkeit, wenn auf einer Karte eine Entfernung in einer bestimmten Himmelsrichtung abgetragen wird, einen visuellen Eindruck davon in der Natur zu erhalten.

Weitere Anwendungen könnten z. B. Feuerüberwachungen oder andere Kontrollmöglichkeiten wie z. B. eine Überwachung des Verkehrsaufkommens auf einer Autobahn o. ä. sein. Ist die Kameraposition entlang des Turmes in der Höhe veränderbar, ergeben sich durch veränderbare Höhen weitere Anwendungsmöglichkeiten.

Zusammengefasst kann also die Kamera, die den optischen Aufnehmer bildet, innerhalb der Gondel einer Windenergienanlage (also des Teils der Windenergieanlage, in der üblicherweise der Generator untergebracht ist), verfahren oder so verschwenkt werden, das der jeweilige aufzunehmende Ort an- oder ausgeleuchtet wird.

Wenn insbesondere Temperaturerhöhungen festgestellt werden sollen, kann der optische Aufnehmer auch als Infrarot-Aufnehmer (Infrarot-Kamera) ausgestaltet sein, so dass dann auch ohne Ausleuchtung thermisch kritische Teile der Windenergieanlage überwacht werden können.

Selbstverständlich kann auch die Kamera selbst den Schallaufnehmer, also das Mikrofon, aufnehmen, so dass dann eine kompakte Einheit geschaffen wird, mit der die Überwachung der Windenergieanlage bzw. dessen Inneren durchgeführt werden kann.

Es ist auch möglich, die Kamera im Bereich des Turmfußes unterzubringen, um beispielsweise dort Anlagenteile, wie Wechselrichter oder Transformator zu überwachen.

Die dem jeweiligen optischen Aufnehmer zugeordneten Leuchtmittel können entweder ständig angeschaltet sein oder auch bevorzugt mittels Fernbedienung eingeschaltet werden und zwar immer dann, wenn die Aufnahme mit dem optischen Aufnehmer erfolgt. Sämtliche Bilder des optischen Aufnehmers können auch mittels entsprechender Einrichtung, z. B. eines Modems, an eine Zentrale geschickt werden, wo dann eine zentrale Überwachung von mehreren Anlagen erfolgt.

Sind die Leuchtmittel - wie vorbeschrieben auch ein Mikrofon - an der Kamera selbst angebracht, ist das Leuchtmittel stets mit der Kamera zusammen verschwenkbar/verfahrbar und eine ausreichende Ausleuchtung des Aufnahmeortes gewährleistet:

Im Übrigen können.aber die Leuchtquellen auch separat verschwenkbar sein, falls dies erforderlich ist.

Ist der vorbeschriebene Schallaufnehmer ein Richtmikrofon, kann mittels eines solchen Aufnehmers die Hauptrichtung entstehenden Schalls festgestellt werden. Wird dieses mittels einer Steuereinrichtung vorgenommen, kann hieraus ein Steuersignal für den optischen Aufnehmer abgeleitet werden, so dass der optische Aufnehmer auf den Hauptort der Schallerzeugung ausgerichtet wird.

Es ist auch möglich, den optischen Aufnehmer als sog. "Web-Cam" auszustatten, so dass der Betreiber der Windenergieanlage (oder andere Internet-Nutzer) sich stets ein Bild von seiner eigenen Anlage bzw. dessen Inneren machen kann und ständig weiß, ob die Anlage noch funktioniert.

Ist ein weiterer optischer Aufnehmer auf der Gondel oder am Turm positioniert, ist es auch möglich, eine Beobachtung der Umgebung der Windenergieanlage durchzuführen, was beispielsweise für die Verkehrsbeobachtung oder auch zur Feuerbeobachtung (dann sind insbesondere Infrarot-Aufnehmer zu empfehlen) sehr vor teilhaft sein kann.

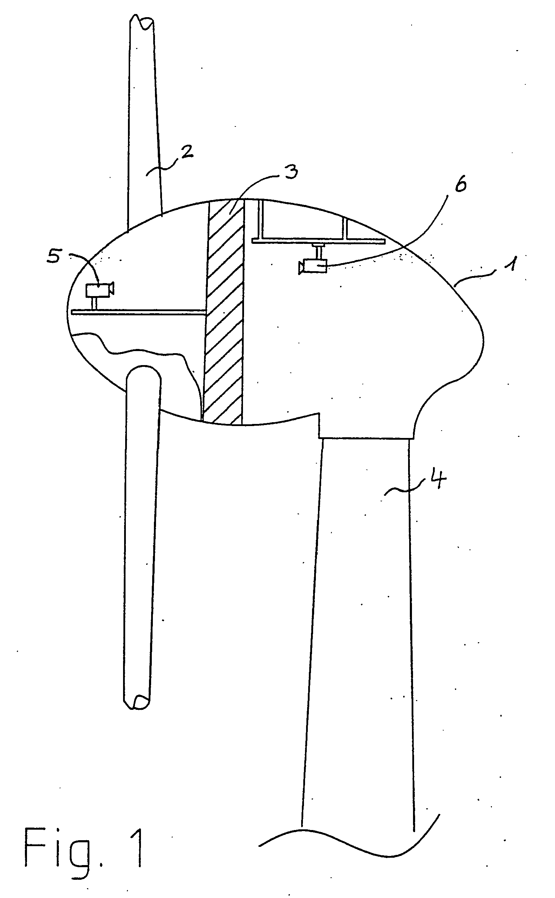

Fig. 1 zeigt im Prinzip den Querschnitt durch eine Gondel einer Windenergieanlage mit einem Gondelgehäuse 1 sowie einen Rotor 2 und einen mit dem Rotor gekoppelten Generator 3 und einen Turm 4 der Windenergieanlage. Innerhalb der Gondel sind als optische Aufnehmer zwei Kameras 5 und 6 untergebracht, die im Wesentlichen auf den Generator ausgerichtet sind. Die Kameras sind entlang einer Schiene verfahrbar, jedoch auch verschwenkbar und mit den Kameras können auch noch andere Ansichten der Gondel aufgenommen werden, insbesondere auch Teile des Rotors bzw. der Rotornabe. Den in Fig. 1 dargestellten Kameras ist es möglich, insbesondere den Generator, also dessen feste und bewegliche Teile hinsichtlich ihrer Funktion auch optisch zu überwachen.

Selbstverständlich können die Kameras auch Mikrofone zur Schallaufnahme aufnehmen oder die Mikrofone sind an ähnlichen Stellen wie die Kameras angeordnet, so dass der Schall innerhalb der Gondel hiermit aufgenommen werden kann.

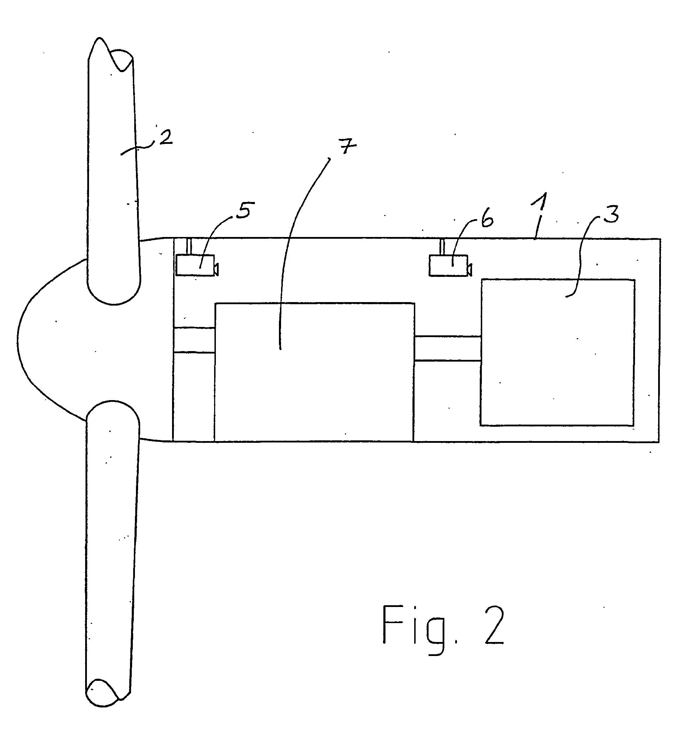

Fig. 2 zeigt einen anderen Aufbau einer Windenergieanlagen-Gondel, wobei der Rotor 2 mit dem Generator 3 über ein Getriebe 7 verbunden ist. Mittels der in der Gondel untergebrachten Kameras 5 oder 6 ist es mithin möglich, sowohl den Generator als auch das Getriebe optisch zu überwachen.

Ist ein Mikrofon-Schallaufnehmer in der Gondel untergebracht (oder mehrere hiervon), ist auch die akustische Überwachung der vorgenannten Teile der Windenergieanlage möglich, insbesondere die akustische Überwachung des Getriebes und des Generators.

## Patentansprüche

1. Verfahren zur Überwachung des Inneren einer Windenergieanlage, bei dem elektrische und/oder mechanische Einheiten überwacht werden und ein Schallaufnehmer den dort entstehenden Schall aufnimmt,
**dadurch gekennzeichnet, dass**
ein optischer Aufnehmer (5,6) auf den Ort entstehenden Schalls gerichtet, verfahren, verschwenkt und/oder eingestellt wird,
ferner mit den Schritten:
- Speichern eines Referenz-Geräuschspektrums einer Windkraftanlage und/- oder Teile davon in einer Speichereinrichtung,
- Aufnehmen des Betriebs-Geräuschspektrums während des Betriebs an der/den bestimmten Stelle/n der Anlage,
- Vergleichen des aufgenommen Betriebs-Geräuschspektrums mit dem gespeicherten Referenzspektrum, und
- Erfassen von Abweichungen zwischen dem Betriebs-Geräuschspektrum und dem Referenzspektrum.

2. Verfahren nach einem der vorhergehenden Ansprüche,
**dadurch gekennzeichnet, dass** der optische Aufnehmer (5, 6) auf einer Schiene fahrbar angeordnet ist und die Schiene einen geschlossenen Ring bildet, welcher im Wesentlichen kreisrund oder elliptisch ist und mit der Kamera eine Innenansicht der gesamten Gondel der Windenergieanlage erstellt werden kann.

3. Verfahren nach einem der vorhergehenden Ansprüche,
**dadurch gekennzeichnet, dass** der optische Aufnehmer (5, 6) ein Infrarot-Aufnehmer ist, mittels dessen bestimmte Teile der Innenanlage der Windenergieanlage auf eine Erwärmung beobachtbar sind.

4. Verfahren nach einem der vorhergehenden Ansprüche,
**dadurch gekennzeichnet, dass** innerhalb des Inneren der Windenergieanlage Leuchtmittel vorgesehen sind, die eingeschaltet sind oder bevorzugt mittels Fernwirkung eingeschaltet werden können, wenn der optische Aufnehmer (5, 6) aktiviert wird, wobei die Leuchtmittel bevorzugt in der Nähe des optischen Aufnehmers (5, 6) angeordnet sind und den Ort, auf den der Aufnehmer (5, 6) gerichtet ist, ausleuchten.

5. Verfahren zur Überwachung einer Windenergieanlage nach einem der vorherigen Ansprüche mit Schritten:
- Aufnehmen eines Referenz-Geräuschspektrums einer Windenergieanlage und/oder Teile davon an zumindest einer bestimmten Stelle der Anlage,
- Speichern dieses Referenzspektrums in einer Speichereinrichtung,
- Aufnehmen des Betriebs-Geräuschspektrums während des Betriebs an der/den bestimmten Stelle/n der Anlage,
- Vergleichen des aufgenommenen Betriebs-Geräuschspektrums mit dem gespeicherten Referenzspektrum, und
- Erfassen von Abweichungen zwischen dem Betriebs-Geräuschspektrum und dem Referenzspektrum.

6. Verfahren nach einem der vorherigen Ansprüche, wobei das Betriebs-Geräuschspektrum kontinuierlich oder wiederkehrend während des Betriebs an der/den bestimmten Stelle/n der Anlage aufgenommen wird.

7. Verfahren nach einem der vorherigen Ansprüche, wobei die erfassten Abweichungen zwischen dem Bethebs-Geräuschspektrum und dem Referenzspektrum an eine Fernüberwachungszentrale übermittelt werden.

8. Verfahren nach einem der vorherigen Ansprüche, wobei die ursprünglichen Geräusche, die die Abweichungen zwischen dem Betriebs- und dem Referenzspektrum verursacht haben, an die Fernüberwachungszentrale übermittelt werden,

9. Verfahren nach einem der vorherigen Ansprüche, wobei aus den ursprünglichen Geräuschen Geräuschmuster gebildet und daraus eine akustische Datenbank aufgebaut werden.

10. Verfahren nach einem der vorherigen Anspruche, wobei die Windenergieanlage abgeschaltet wird, wenn die Abweichungen zwischen Betriebsspektrum und Referenzspektrum einen vorgegebenen Schwellwert überschreiten.

11. Windenergieanlage, mit
wenigstens einem Schallaufnehmer an zumindest einer vorgegebenen Stelle der Windenergieanlage zum Aufnehmen von Schall oder Geräuschen der Windenergieanlage und/oder eines Geräuschspektrums der Windenergieanlage,
einem optischen Aufnehmer (5, 6), welcher in einer Gondel der Windenergieanlage angeordnet ist und auf den Ort, an dem Schall oder Geräusche entstehen, zurichtbar und/oder verschwenkbar ist, und
zumindest einem Schallaufnehmer an zumindest einer bestimmten Stelle der Anlage zum einmaligen Aufnehmen des Referenz-Geräuschspektrums und zum kontinuierlichen Aufnehmen des Betriebs-Geräuschspektrums der Windenergieanlage und/oder Teile davon, einer Speichereinrichtung zum Speichern des Referenzspektrums der Anlage, und einer Datenverarbeitungseinrichtung zum Vergleichen des aufgenommenen Betriebs-Geräuschspektrums mit dem gespeicherten Referenzspektrum und zum Erfassen von Abweichungen zwischen dem Betriebs-Geräuschspektrum und dem Referenzspektrum, wobei die Windenergieanlage gegebenenfalls abgeschaltet wird, wenn die Abweichungen zwischen Betriebsspektrum und Referenzspektrum einen vorgegebenen Schwellwert überschreiten.

## Claims

1. Method for monitoring the interior of a wind power installation,
wherein electrical and/or mechanical units are monitored and an acoustic pick-up picks up the sound produced there,
**characterised in that**
an optical recorder (5, 6) is directed at, moved towards, pivoted towards and/or focused on the location where sound is produced,
further comprising the steps of:
- storing a reference noise spectrum of a wind power installation and/or parts thereof in a storage device,
- recording the operating noise spectrum during operation at the defined point(s) of the installation,
- comparing the recorded operating noise spectrum with the stored reference spectrum, and
- detecting deviations between the operating noise spectrum and the reference spectrum.

2. Method according to claim 1,
**characterised in that** the optical recorder (5, 6) is movably disposed on a rail, and the rail forms a closed ring that is substantially circular or elliptical, and an inside view of the entire nacelle of the wind power installation may be produced with the camera.

3. Method according to one of the preceding claims,
**characterised in that** the optical recorder (5, 6) is an infrared recorder, by means of which defined parts of the internal equipment of the wind power installation may be observed to detect heating.

4. Method according to any one of the preceding claims,
**characterised in that** lighting means are provided in the interior of the wind power installation, which are on or preferably may be switched on remotely when the optical recorder (5, 6) is activated, wherein the lighting means are preferably disposed near the optical recorder (5, 6) and illuminate the location at which the recorder (5, 6) is directed.

5. Method for monitoring a wind power installation according to any one of the preceding claims, comprising the steps of:
- recording a reference noise spectrum of a wind power installation and/or parts thereof at at least one defined point of the installation,
- storing that reference spectrum in a storage device,
- recording the operating noise spectrum during operation at the defined point(s) of the installation,
- comparing the recorded operating noise spectrum with the stored reference spectrum, and
- detecting deviations between the operating noise spectrum and the reference spectrum.

6. Method according to any one of the preceding claims, wherein the operating noise spectrum is recorded continuously or recurrently during operation at the defined point(s) of the installation.

7. Method according to any one of the preceding claims, wherein the detected deviations between the operating noise spectrum and the reference spectrum are communicated to a remote monitoring centre.

8. Method according to any one of the preceding claims, wherein the original noises that have caused the deviations between the operating and the reference spectrum are communicated to the remote monitoring centre.

9. Method according to any one of the preceding claims, wherein noise patterns are formed from the original noises and an acoustic database is created therefrom.

10. Method according to any one of the preceding claims, wherein the wind power installation is shut down when the deviations between operating spectrum and reference spectrum exceed a predetermined threshold value.

11. Wind power installation, having
at least one acoustic pick-up at at least one pro-defined point of the wind power installation for recording sound or noises of the wind power installation and/or a noise spectrum of the wind power installation,
an optical recorder (5, 6) which is disposed in a nacelle of the wind power installation and which can be oriented and/or pivoted towards the location where sound or noises is/are produced, and
at least one acoustic pick-up at at least one defined point of the installation for one-off recording of the reference noise spectrum and for continuous recording of the operating noise spectrum of the wind power installation and/or parts thereof, a storage device for storing the reference spectrum of the installation, and a data-processing device for comparing the recorded operating noise spectrum with the stored reference spectrum and for detecting deviations between the operating noise spectrum and the reference spectrum, wherein the wind power installation is shut down if appropriate when the deviations between the operating spectrum and the reference spectrum exceed a predetermined threshold value.

## Revendications

1. Procédé de surveillance de l'intérieur d'une éolienne, pour lequel des unités électriques et/ou mécaniques sont surveillées et un capteur acoustique prend le son qui y est apparu, **caractérisé en ce qu'**un capteur (5, 6) optique est dirigé, déplacé, pivoté et/ou réglé sur le lieu du son apparu, de plus avec les étapes suivantes :
- enregistrement d'un spectre de bruit de référence d'une éolienne et/ou des parties de celle-ci dans un dispositif d'enregistrement,
- enregistrement du spectre de bruit de fonctionnement pendant le fonctionnement à/aux endroit(s) déterminés de l'installation,
- comparaison du spectre de bruit de fonctionnement pris avec le spectre de référence enregistré, et
- détection des divergences entre le spectre de bruit de fonctionnement et le spectre de référence.

2. Procédé selon l'une quelconque des revendications précédentes, **caractérisé en ce que** le capteur (5, 6) optique est disposé de manière mobile sur un rail et le rail forme un anneau fermé qui est essentiellement circulaire ou elliptique et avec la caméra, une vue intérieure de la nacelle entière de l'éolienne peut être établie.

3. Procédé selon l'une quelconque des revendications précédentes, **caractérisé en ce que** le capteur (5, 6) optique est un capteur infrarouge, au moyen duquel un réchauffement des parties déterminées de l'installation intérieure de l'éolienne peut être observé.

4. Procédé selon l'une quelconque des revendications précédentes, **caractérisé en ce qu'**à l'intérieur de l'éolienne des moyens lumineux sont prévus, lesquels sont activés ou peuvent être activés de préférence au moyen d'une télécommande, si le capteur (5, 6) optique est activé, dans lequel les moyens lumineux sont disposés de préférence à proximité du capteur optique (5, 6) et éclairent le lieu sur lequel est dirigé le capteur (5, 6).

5. Procédé de surveillance d'une éolienne selon l'une quelconque des revendications précédentes, avec les étapes suivantes :
- enregistrement d'un spectre de bruit de référence d'une éolienne et/ou des parties de celle-ci au moins à un endroit déterminé de l'installation,
- enregistrement de ce spectre de référence dans un dispositif d'enregistrement,
- enregistrement du spectre de bruit de fonctionnement pendant le fonctionnement à/aux endroits déterminés de l'installation,
- comparaison du spectre de bruit de fonctionnement pris avec le spectre de référence enregistré, et
- détection de divergences entre le spectre de bruit de fonctionnement et le spectre de référence.

6. Procédé selon l'une quelconque des revendications précédentes, le spectre de bruit de fonctionnement étant capté en continu ou de manière récurrente pendant le fonctionnement à/aux (l')endroit(s) déterminé(s) de l'installation.

7. Procédé selon l'une quelconque des revendications précédentes, les divergences détectées entre le spectre de bruit de fonctionnement et le spectre de référence étant transmises à une centrale de télésurveillance.

8. Procédé selon l'une quelconque des revendications précédentes, les bruits originaux qui ont causé les divergences entre le spectre de fonctionnement et le spectre de référence, étant transmis à la centrale de télésurveillance.

9. Procédé selon l'une quelconque des revendications précédentes, des modèles de bruits étant formés à partir des bruits originaux et une base de données acoustique est constituée à partir de là.

10. Procédé selon l'une quelconque des revendications précédentes, l'éolienne étant mise hors service si les divergences entre le spectre de fonctionnement et le spectre de référence dépassent une valeur seuil prescrite.

11. Éolienne comprenant
au moins un capteur acoustique à au moins un endroit défini de l'éolienne pour la prise de son ou de bruits de l'éolienne et/ou d'un spectre de bruit de l'éolienne,
un capteur (5, 6) optique qui est disposé dans une nacelle de l'éolienne et peut être orienté et/ou pivoté sur le lieu sur lequel le son ou les bruits apparaissent, et
au moins un capteur acoustique à au moins un endroit déterminé de l'installation pour la première prise du spectre de bruit de référence et pour la prise en continu du spectre de bruit de fonctionnement de l'éolienne et/ou des parties de celle-ci, un dispositif d'enregistrement pour l'enregistrement du spectre de référence de l'installation, et un dispositif de traitement des données pour la comparaison du spectre de bruit de fonctionnement pris avec le spectre de référence enregistré et pour la détection de divergences entre le spectre de bruit de fonctionnement et le spectre de référence, dans lequel l'éolienne est éventuellement mise hors service si les divergences entre le spectre de fonctionnement et le spectre de référence dépassent une valeur seuil définie.
